# EUROPEAN PATENT SPECIFICATION

(11) **EP 2 908 113 B1**
(45) Date of publication and mention of the grant of the patent: **19.09.2018**
(21) Application number: 14155536.7
(22) Date of filing: 18.02.2014
(51) Int. Cl.: G01M 3/16

(54) **A probe device configured for detecting the presence of a liquid, and an apparatus comprising such a probe device**
Zur Detektion einer Flüssigkeit konfigurierte Sondenvorrichtung und Vorrichtung mit solch einer Sondenvorrichtung
Dispositif de sonde configuré pour détecter la présence d'un liquide et appareil comprenant un tel dispositif

(43) Date of publication of application: 19.08.2015
(73) Proprietor: Alfa Laval Corporate AB, 221 00 Lund (SE)
(72) Inventor: Nyander, Anders, 245 91 Staffanstorp (SE); Bertilsson, Klas, 241 93 Eslöv (SE); Blomgren, Jakob, 442 39 Kungälv (SE); Johansson, Christer, 413 25 Göteborg (SE)
(74) Representative: Alfa Laval Attorneys

(56) References cited:
- US-A- 4 877 923
- US-A- 4 926 165
- US-A- 5 177 996

## Description

### THE TECHNICAL FIELD OF THE INVENTION

The present invention refers to a probe device configured for detecting the presence of a liquid according to the preamble of claim 1. Such a probe device is disclosed in WO 2012/053958. The present invention also refers to an apparatus comprising such a probe device.

### BACKGROUND AND PRIOR ART

The solution proposed in WO 2012/053958 is configured for leak detection in a plate heat exchanger, and is in particular based on capacitance measurements. Liquid is detected by a change in the capacitance between the probe device and at least one of the heat exchanger plates compared to when only air is present between the probe device and the plate.

This known solution has turned out to work fine, especially in connection with detection of liquids having a high dielectric value, such as water and water based liquids. However, in combination with some liquids, such as oil and other-substances, with a low dielectric value, the signal change when the probe is wetted by the liquid is much lower than in the case with water based liquids.

The applicant has performed various tests in different situations. When the probe, which typically could be a lacquer-coated copper wire, is wetted with a water based liquid, the signal change of the capacitance has been doubled when the wire has been squeezed between two typical heat exchanger plates. In similar tests made with low dielectric liquids, like transformer oil, the signal change has only been about 5 - 10%. Such a low signal change makes it much more challenging to put an alarm limit for the leak detection. Thus, the requirements of system stability becomes very tough.

WO2012/053957 discloses another heat exchanger plate having a probe device of the initially defined kind, and a communication module for enabling communication of the sensed capacitance to a master unit.

US 4 877 923 discloses a sensor for detecting and locating liquid leaks.

### SUMMARY OF THE INVENTION

The object of the present invention is to remedy the problems discussed above and to provide a probe device suitable for leak detection of liquids having a low dielectric value, such as oil, especially transformer oil.

This object is achieved by the probe device initially defined, which is characterized in that the apparatus comprises a heat exchanger plate for a plate heat exchanger, the first part element being a first plate and the second part element a second plate and that the probe is then provided between the adjoining first and second plates and located in heat transfer area.

By means of such a probe, a minimum distance, or a gap, between the ground element and the electric conduit element may be ensured. A determined minimum distance permits a significant signal change to be achieved also for liquids having a low dielectric value. The structural element, being porous with internal cavities, will permit entry and supply of the liquid to be detected into the porous structural element so that the dielectric medium will be present between the electric conduit element and the ground element.

Advantageously, the electric conduit element is an electrically conducting wire having a circular or oval cross-section transversally to the longitudinal extension. Alternatively, the electric conduit element is an electrically conducting strip, foil or net.

According to an embodiment of the invention, the structural element is absorbing with a capability to absorb the liquid to be detected into the structural element and to distribute the liquid in the structural element around and along the electric conduit member. The structural element may thus comprise or be formed by a porous material with absorbing properties. The structural element may have a high rigidity or a low rigidity. For instance, the structural element may comprise or be formed by textile materials, such as cotton or silk, synthetic materials or plastic materials, such as a plastic net having absorbing properties.

According to a further embodiment of the invention, the electric insulation is provided between the peripheral border and the electric conduit element. Advantageously, the electric insulation may comprise a cover layer extending on and around the electric conduit element. For instance the cover layer may be in the form of a lacquer layer applied on an outer surface of the electric conduit element. Alternatively or supplementary, the electric insulation may comprise or be formed by the structural element.

According to a further embodiment of the invention, the probe comprises a sheath provided around the structural element. The sheath may provide rigidity to the probe, especially in the case of the structural element having a low rigidity. The sheath may then contribute to ensure the determined minimum distance between the outer peripheral border and the electric conduit element. Advantageously, the sheath extends along the length of the electric conduit element.

According to a further embodiment of the invention, the sheath is permeable to permit said entry of said liquid into the structural element. The sheath may be made of a porous material, or perforated material having a plurality of holes or apertures of any suitable size.

According to a further embodiment of the invention, the sheath is of a metallic material. In this case, the sheath may form the ground element. This is advantageous since it permits testing of the probe device without the need of mounting the probe in the apparatus or other equipment where a liquid is to be detected. In case the apparatus is a plate heat exchanger, the heat exchanger plates do not need to be finally pressed against each other before testing of the function of the probe device is possible. When the probe is mounted to the plate the metallic sheath will be grounded against the heat exchanger plates of metallic material. The probe with a metallic sheath may also be used in an apparatus, such as a plate heat exchanger having heat exchanger plates of a non-metallic or non-conductive material, such as plastic heat exchanger plates. The sheath may be formed by a metal sheet or a metal plate.

According to a further embodiment of the invention, the sheath is formed by a metal wire wound around the structural element.

According to a further embodiment of the invention, the structural element comprises communicating cavities.

According to a further embodiment of the invention, the electric conduit element has a proximal end and a distal end, wherein the electric conduit element is connected to a connector provided at the proximal end. The connector may be associated with the probe or form a part of the probe or the probe device. The connector may comprise a measuring unit for measuring or determining the capacitance between the electric conduit element and the ground element. The connector may enable connection and communication with further equipment, such as a master unit, an overall control system, and/or the measuring unit located outside the connector.

The object is also achieved by the apparatus initially defined, which comprises a first part element and a second part element provided beside each other and enclosing a space, wherein the probe is provided in said space between the first and second part elements.

According to a further embodiment of the invention, the apparatus comprises a heat exchanger plate for a plate heat exchanger, the first part element being a first plate and the second part element a second plate. Thus, the invention may be realized as a heat exchanger plate comprising a probe device as defined above. Moreover, the invention may be realized as a plate heat exchanger comprising a plurality of such heat exchanger plates provided beside each other in a plate package to form first plate interspaces for a first medium and second plate interspaces for a second medium.

According to a further embodiment of the invention, the heat exchanger plate is a double wall plate formed by the first plate and the second plate, which adjoin each other and are compressed to be in contact with each other, wherein the heat exchanger plate comprises a heat transfer area, and an edge area, which extends around and outside the heat transfer area.

According to a further embodiment of the invention, the probe is located at the heat transfer area.

According to a further embodiment of the invention, at least one of the first plate and the second plate comprises a gasket area inside the edge area and a depression along the gasket area, thereby forming a gap between the adjoining first and second plates, in which the probe is at least partly located.

According to a further embodiment of the invention, the heat exchanger plates are configured to separate first plate interspaces for a first medium and second plate interspaces for a second medium in the plate heat exchanger. At least one or both of the first medium and the second medium may be oil, especially transformer oil. If there is a leakage in any one of the plates, the oil will change the capacitance in the space, and thus be detected. If the first and second media are two different liquids, the probe is able to detect which media is leaking since different liquids may have different dielectric value, which will result in a different capacitance change in comparison with air or any other gas present before the leakage occurs.

According to a further embodiment of the invention, the apparatus comprises a pipe, the first part element being an inner pipe and the second part element an outer pipe, the inner pipe and the outer pipe forming a space between each other in which the probe is provided. Such a pipe may be used for transport of liquid, wherein a leakage of the liquid to be transported through inner pipe crack may be detected by means of the probe. Such a tube may be used in a tube heat exchanger.

The present invention may thus be realized as a heat exchanger in the form of a plate heat exchanger or a tube heat exchanger.

### BRIEF DESCRIPTION OF THE DRAWINGS

The present invention is now to be explained more closely through a description of various embodiments and with reference to the drawings attached hereto.
- Fig 1: shows a partly sectional view of a probe device according to a first embodiment of the invention.
- Fig 2: shows a partly sectional view of a probe device according to a second embodiment of the invention.
- Fig 3: shows the probe device in Fig 1 arranged in a container.
- Fig 4: discloses a front view of a plate heat exchanger comprising a plurality of heat exchanger plates.
- Fig 5: discloses a side view of the plate heat exchanger along the line V-V in Fig 4.
- Fig 6: discloses a front view of a heat exchanger plate of the plate heat exchanger in Fig 4.
- Fig 7: discloses a sectional view through the heat exchanger plate along the line VII-VII in Fig 6.
- Fig 8: discloses a front view of a part of a variant of the heat exchanger plate in Fig 6.
- Fig 9: discloses a sectional view transversely to a gasket area of the heat exchanger plate in Fig 6.
- Fig 10: discloses an end view of a pipe with the probe device.
- Fig 11: discloses a diagram of the capacitance change for water.
- Fig 12: discloses a diagram of the capacitance change for oil.

### DETAILED DESCRIPTION OF VARIOUS EMBODIMENTS

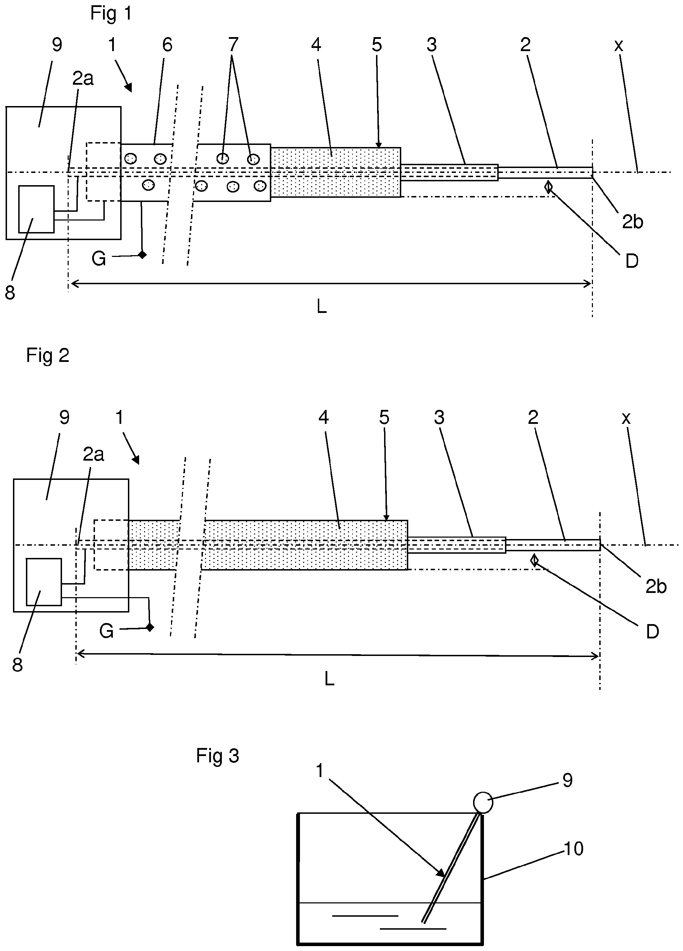

Fig. 1 discloses a part of a probe device having a probe 1 configured for detecting the presence of a liquid by sensing the capacitance. The probe 1 comprises an electric conduit element 2. The electric conduit element 2 has a longitudinal extension and a length L. The electric conduit element 2 extends from a proximal end 2a to a distal end 2b. In Figs 1 and 2, the electric conduit element 2 extends along a longitudinal axis x. It is to be noted, however, that the probe 1 and the electric conduit element 2 may also have a curved extension.

The electric conduit element 2 comprises or consists of a metal or metal alloy, for instance at least one of the elements Cu, Ag, Al and Fe.

In the first embodiment, the electric conduit element 2 is in form of a wire, for instance with a circular or oval cross-section transversally to the longitudinal extension. The electric conduit element 2 may also have other shapes, such as a strip, a foil or a net.

Furthermore, the probe 1 comprises an electric insulation 3 insulating the electric conduit element 2. In the first embodiment, the electric insulation comprises a cover layer 3 extending on and around the electric conduit element 2 along the length L of the electric conduit element 2. The cover layer 3 may comprise or consist of a polymer layer, for instance a lacquer layer.

Furthermore, the probe 1 comprises a structural element 4 provided around the electric conduit element 2 and extending along the length L of the electric conduit element 2. The structural element 4 has an outer surface and defines an outer peripheral border 5 located at a determined minimum distance D from the electric conduit element 2.

The structural element 4 is porous, thereby permitting entry of the liquid to be detected into the structural element 4. The liquid to be detected will then form a dielectric medium. In particular, the structural element 4 is absorbing, i.e. the structural element 4 has a capability to absorb the liquid to be detected into the structural element 4, and furthermore to distribute the liquid in the structural element 4 around and along the electric conduit member 2. The structural element 4 thus comprises internal communicating cavities, or cells or pores, so that the liquid will be contained in the structural element 4 and fill out the communicating cavities between the peripheral border 5 and the electric conduit element 2.

The structural element 4 is formed by or comprises a material having absorbing properties. For instance, the structural element 4 may comprise or be formed by textile materials, such as cotton or silk. The structural element 4 may also be formed by or comprise synthetic materials or plastic materials. For instance the structural element 4 may comprise or be formed by a plastic net having absorbing properties. Such plastic nets having absorbing properties are commercially available.

An example of a structural element 4 is a textile thread, which is spun or wound around the electric conduit element 2 to form a structural element 4 of a desired thickness.

The thickness of the structural element 4 provides the determined minimum distance D. The distance D is depending on the cross-sectional size or diameter of the electric conduit element 2, and the thickness of the cover layer 3 in case such a layer is supplied on the surface of the electric conduit element 2. The cover layer 3 is thin, especially in relation to the diameter of the electric conduit element 2 and/or in relation to the thickness of the structural element 4.

The probe 1 according to the first embodiment also comprises a sheath 6 provided around the structural element 4. The sheath 6 extends around the structural element 4 and abuts the outer surface of the structural element 4. The outer peripheral border 5 thus is or forms the interface between the structural element 4 and the sheath 6.

The sheath 6 is permeable to permit the entry of the liquid to be detected into the structural element 4. The permeability may be achieved by a plurality of holes or apertures 7 as shown in Fig. 1. The permeability may also be obtained in other ways, for instance by a sheath 6 made by a porous material, or comprising or consisting of a thread wound around the structural element 4.

In the first embodiment, the sheath 6 is of a metallic material. For instance the sheath 6 may be formed by a metal sheet applied around the structural element 4. Alternatively, the sheath 6 may be formed by a metal wire wound around the structural element 4. Such a metal wire wound around the structural element 4 will provide the permeability mentioned above.

The probe device is associated with or comprises a measuring unit 8. The measuring unit 8 is electrically connected to the electric conduit element 2 and to the sheath 6. The measuring unit 8 may apply a voltage to the electric conduit element 2 and to the sheath 6 to provide a potential difference between the electric conduit element 2 and the sheath 6. The probe 1 will then function as a capacitance, wherein the value of the capacitance will vary with the liquid entering the structural element 4. The measuring unit 8 may be configured to measure the capacitance between the electric conduit element 2 and the ground element G or the sheath 6. When liquid enters the structural element 4, a notable capacitance change will be detected by the measuring unit 8.

In the first embodiment, the sheath 6 forms a ground element G.

It is to be noted that the cover layer 3, the structural element 4 and the sheath 6 extend over the whole length of the probe 1 and thus over the whole length L of the electric conduit element 2. Especially, the cover layer 3 also covers the distal end 2b of the electric conduit element 2. At the proximal end 2a of the electric conduit element 2, and of the probe 1, there may be provided a connector 9 which enable connection of the probe 1 to the measuring unit 8 or to further equipment or further probes in an apparatus in which the probe 1 is to be used. The connector 9 may for instance be a communication module of the kind disclosed in WO 2012/053957 or WO 2013/053958 mentioned above. The measuring unit 8 may be incorporated in the connector 9, as indicated in Figs 1 and 2.

The structural element 4 may be made of an electrically non-conducting element, and thus functioning as an electric insulation. It should thus be noted that the electric insulation may be formed not only by the cover layer 3 but also by the structural element 4 itself. In this case it may be possible to dispense with the cover layer 3.

A use of the probe device according to the first embodiment is illustrated in Fig 3. The probe device is introduced into a container 10, wherein the supply or introduction of a liquid into the container 10 will be detected by the measuring unit 8 as a capacitance between the ground G and the electric conduit element 2. The liquid introduced into the container 10 will penetrate the structural element 4 and influence the dielectric value. Different dielectric values will be achieved by different liquids, which means that the probe 1 also enables determination of which liquid is introduced into the container 10.

The invention is not limited to the probe device being used in a container 10 but the probe device according to the first embodiment may be introduced into every possible space in which the presence of a liquid is to be detected.

It is also to be noted that the sheath 6 may be made of a non-metallic, and thus non-conducting material. The sheath may then have the purpose of providing an increased strength to the probe 1. In this case, the probe 1 is to be applied adjacent to the ground element G, wherein the capacitance is measured between the ground element G and the electric conduit element 2 by means of the measuring unit 8.

Fig 2 discloses a second embodiment, which differs from the first embodiment in that no sheath 6 is provided around the structural element 4. Also in this case, the probe 1 has to be provided adjacent to the ground element G in order to enable sensing of the capacitance between the ground element G and the electric conduit element 2.

A further use of the probe device may be in an apparatus comprising a first part element and a second part element provided beside each other and enclosing a space. The probe device may be a part of the apparatus and provided in said space between the first element and the second part element.

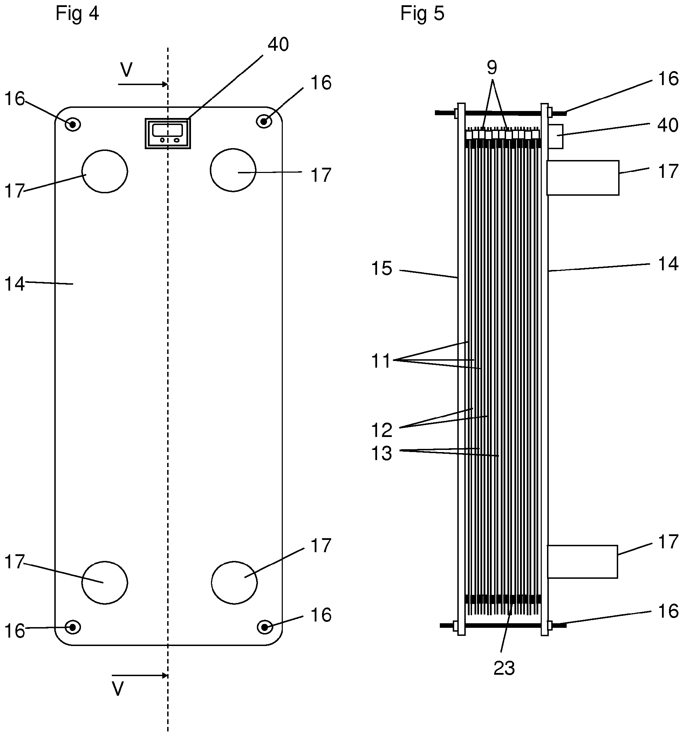

Such an apparatus may be a plate heat exchanger comprising a plurality of heat exchanger plates 11 forming a plate package, see Figs 4 to 8. The heat exchanger plates 11 are arranged beside each other to define several first plate interspaces 12 for a first medium and several second plate interspaces 13 for a second medium. The first plate interspaces 12 and the second plate interspaces 13 are arranged in an alternating order in the plate package. The heat exchanger plates 11 of the plate package are pressed against each other between a frame plate 14 and a pressure plate 15 by means of tie bolts 16. In Figs 4 to 8, the plate heat exchanger comprises four porthole channels 17 forming an inlet and an outlet for the first medium and an inlet and an outlet for the second medium. At least one of the first medium and the second medium is a liquid.

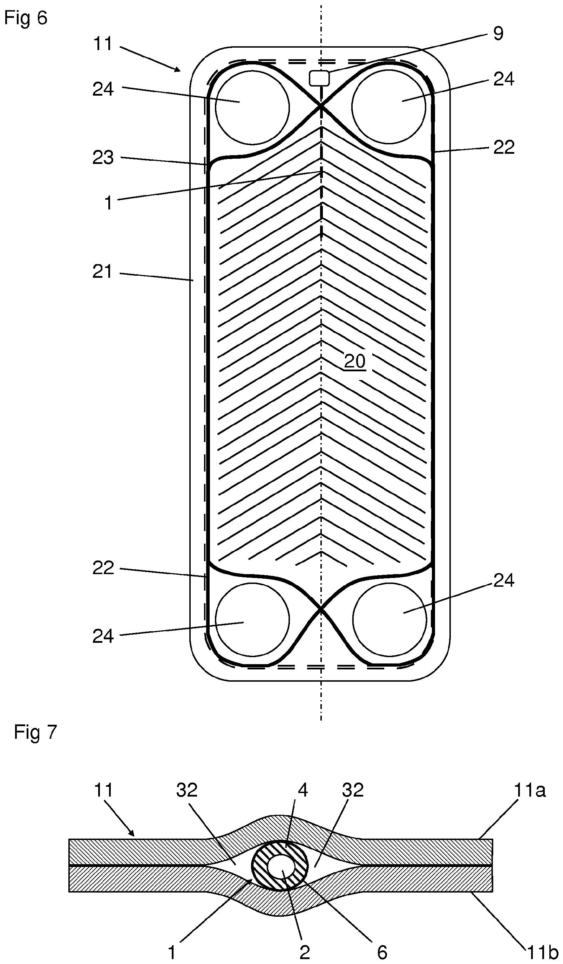

One of the heat exchanger plates 11 is disclosed in Fig 6. The heat exchanger plate 11 comprises a heat transfer area 20, an edge area 21, which extends around and outside the heat transfer area 20, and a gasket area 22, which extends around the heat transfer area 20 between the heat transfer area 20 and the edge area 21. A gasket 23 is provided on the gasket area 22 and extends around and encloses the heat transfer area 20.

In the plate heat exchanger disclosed in Figs 4 to 8, four portholes 24 are provided and extend through the heat exchanger plate 11. The portholes 24 are located inside and in the proximity of the edge area 21. The portholes 24 are aligned with the porthole channels 17.

The plate heat exchanger is thus mounted and held together by means of tie bolts 16 and gaskets 23. It is to be noted, however, that the invention is applicable also to plate heat exchangers of other kinds. The heat exchanger plates 11 may for instance be permanently connected to each other by means of welding, such as laser welding or electron beam welding, gluing or even brazing. An example of an alternative mounting of the heat exchanger plates 11, is a so called semi-welded plate heat exchanger where the heat exchanger plates 11 are welded to each other in pairs, whereby the pairs of heat exchanger plates 11 may be pressed against each other by means of tie bolts with gasket provided between the pairs. Furthermore, it is to be noted that the plate heat exchanger may lack porthole channels, whereby the sides of the plate heat exchanger present openings to the plate interspaces 12 and 13 for the supply and discharge of the media. Alternatively, one of the plate interspaces 12, 13 may be accessible via porthole channels, whereas the other of the plate interspaces may be accessible via the side of the plate heat exchanger.
The heat exchanger plate 11 is a double wall plate, see Fig 7, i.e. the heat exchanger plate 11 is formed by two adjoining plates, a first plate 11a and a second plate 11b compressed to be in contact with each other.
The adjoining first and second plates 11a, 11b may be manufactured of an electrically conducting material, for instance a metal material, such as stainless steel, titanium, aluminum, copper, etc., or a polymer material.

A probe device is comprised by the heat exchanger plate 11.

Each or substantially each heat exchanger plate 11 of the plate heat exchanger comprises a probe device. The probe 1 is then provided between the adjoining first and second plates 1a, 1b and located in the heat transfer area 10. The probe 1 is configured for detecting the presence of a liquid between the adjoining plates 11a, 11b.

The probe 1 is preferably positioned between the adjoining first and second plates 11a and 11b before they are finally mounted or compressed together. A deformation of the material of the adjoining plates 11a, 11b may take place in connection with the compressing of the individual plate 11a, 11b so that there will be a protruding area along the probe 1 on at least one of the adjoining plates 11a and 11b, as can be seen in Fig 7. Thereby, a space 32 is formed in the proximity of the probe 1.

The space 32 may also be formed in advance, i.e. before the probe 1 is positioned between the plates 11a and 11b. The adjoining plates 11a, 11b may then be compressed together in a first step. Thereafter, the plates 11a, 11b are separated, and one or both of the plates 11a, 11b are deformed to form the space 32 in a suitable pressing tool. The probe 1 is then positioned in the space 32, whereafter the plates 11a, 11b are pressed against each other.

The space 32 extends along the probe 1 between the probe 1 and the adjoining plates 11a, 11b. The compressing of the adjoining plates 11a, 11b takes place at a high pressure so that a very thin capillary gap will remain between the adjoining plates 11a, 11b, merely permitting transport or distribution of a fluid by means of capillary forces. However, such distribution will ensure that any of the primary medium and the secondary medium entering the capillary gap between the adjoining plates 11a, 11b will reach the space 32.

In order to achieve an appropriate capillary gap between the adjoining plates 11a, 11b for the capillary forces to permit the distribution of the liquid, one or both of the plates 11a, 11b on the surface turned towards the other plate, may have a pattern or other irregular surface structure, for instance a rest pattern from the manufacturing of the sheet material of the plates 11a, 11b. It is to be understood that such a surface structure is very thin in the order of a few microns.

The probe 1 is thus configured to sense the capacitance between the electric conduit element 2 and the sheath 6 or the adjoining plates 11a, 11b. If the sheath 6 is of metallic material, the capacitance may be sensed between the electric conduit element 2 and the sheath 6 as explained above. With such a probe 1 with a sheath 6 of metallic material, the probe 1 may also be used in plate heat exchangers having heat exchanger plates 11 which are made of a material that is electrically non-conducting, such as plastics.

If the sheath 6 is of non-metallic, electrically non-conductive material or if no sheath 6 is provided as disclosed in Fig 2, the capacitance may be sensed between the electric conduit element 2 and the adjoining plates 11a, 11b, wherein at least one of the adjoin plates 11a, 11b forms the ground element G.

In case of a crack leading to a leakage in any one of the adjoining first and second plates 11a, 11b, one of the primary medium and the secondary medium will enter the capillary gap between the adjoining plates 11a and 11b and be distributed to the space 32 by means of capillary forces. The medium will change the dielectric value between the electric conduit element 2 and the adjoining plates 11a, 11b.

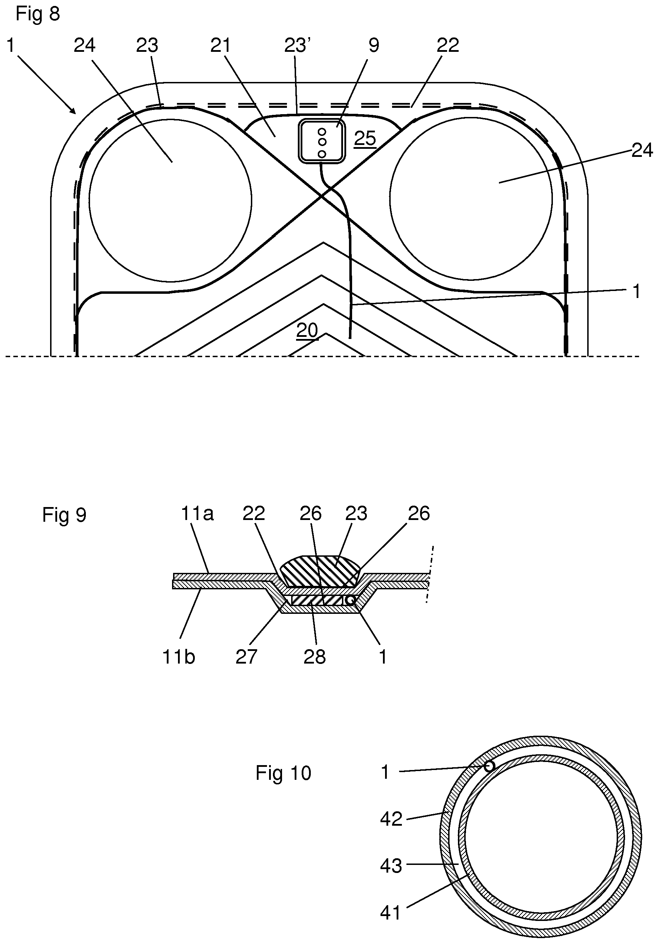

The connector 9 is provided in the edge area 21, where it may be properly protected from the media flowing in the plate interspaces 12, 13 of the plate heat exchanger. Furthermore, the connector 9 is in this position easily accessible from outside, as can be seen in Fig 6. However, in the variant disclosed in Fig 8, the connector 9 may be provided in a space 25, in which it is enclosed by the gasket 23 and an additional gasket 23', and thus separated also from the environment.

The heat exchanger plate 11 may comprise a cut-out (not disclosed) in the form of an opening or recess. The cut-out provided in the edge area 21. The connector 9 may be provided in the cut-out, which provides an advantageous position for the connector 9. The cut-out may extend to the edge or be provided inside the edge of the heat exchanger plate 11.

At least one of the adjoining first and second plates 11a, 11b may comprise a depression 26 extending along the gasket area 22 in parallel with the edge area 21. The depression forms a gasket groove for receiving the gasket 23. The probe 1 may be bent to follow the depressions when passing the gasket area 22. The probe 1 may have a foil shape at least at the gasket area 22 to increase the strength to withstand the bending.

Furthermore, the depression 26 may form a gap 27 between the adjoining plates 11a and 11b along the gasket area 22. The probe 1 may at least partly be located in this gap 27. Advantageously, a further gasket 28 may be provided in this gap 27, wherein the probe 1 is provided beside the further gasket 28 towards the heat transfer area 20.

As mentioned above, the measuring unit 8 may be incorporated or embedded in the connector 9. However, the measuring unit 8 may also be located outside the connector, for instance remote from the plate heat exchanger 11.

The connector 9 may comprise a communication module, such as a so called bus module, which comprises an electronic circuit and communicates with the probe 1 and a master unit 40, see Figs 4 and 5. Such a communication module is described in WO 2012/053957.

The apparatus mentioned above may also be a pipe, see Fig 10. The first part element is then an inner pipe 41 and the second part element is an outer pipe 42. The pipes 41 and 42 form a double wall pipe. The pipes 41 and 42 are arranged to form a space 43, or capillary gap, between each other as shown in Fig 9. A probe device is provided in the space 43. The space 43 may have the same thickness around the pipe as shown in Fig 9, or have a greater thickness in the proximity of the probe 1 as shown in Fig 7. If the pipe is configured for the transport of liquid, a defect such as a crack in the inner pipe 42 will permit the liquid to enter the space 43. The liquid will be sensed by the probe 1 and adequate measures may be taken. Such a tube may be used in a tube heat exchanger. In this case also a leakage of the liquid outside the tube through the outer pipe 42 may be detected.

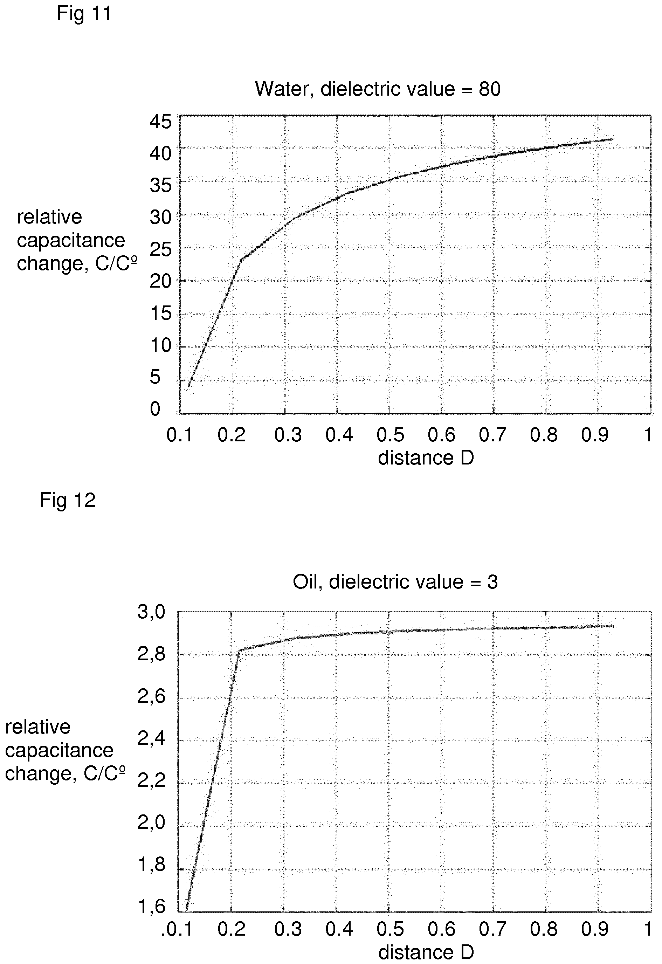

Fig 11 discloses a diagram of a theoretical calculation of the relative change of the capacitance when air is replaced by water between an electric conduit element and a ground element G. As can be seen the capacitance change dependence on the distance D between the conduit element and the ground element. Already at a distance D greater than 0,1 mm a noticeable capacitance change of approximately 500% is obtained.

Fig 12 discloses a diagram of a theoretical calculation of the relative change of the capacitance when air is replaced by oil with low dielectric value between an electric conduit element and a ground element. A capacitance change of approximately 60% is obtained at a distance D greater than 0,1 mm. A capacitance change of approximately 280% is obtained at a distance D greater than 0,2 mm. Such a capacitance change is easily detectable.

It is clear from the diagrams, that the difference in the dielectric value of different liquids, will make it possible to determine which liquid is detected by the probe 1. This is also possible for other liquids than water and oil.

The applicant has performed experiments that confirm the results shown in Figs 11 and 12. A wire with a diameter of 0,2 mm was then used as the electric conduit element.

## Claims

1. An apparatus comprising a probe device configured for detecting the presence of a liquid by sensing the capacitance between an electric conduit element (2) and a ground element, the probe device comprises a probe (1) comprising
said electric conduit element (2) having a longitudinal extension and a length (L), and
an electric insulation insulating the electric conduit element (2), whereby the probe (1) comprises a structural element (4) provided around the electric conduit element (2) and extending along the length (L) of the electric conduit element (2), and the structural element (4) defines an outer peripheral border (5) located at a determined minimum distance (D) from the electric conduit element (2), and the structural element (4) is porous thereby permitting entry of said liquid to be detected into the structural element (4), wherein the liquid to be detected forms a dielectric medium.
**characterised in that** the apparatus comprises a heat exchanger plate (11) for a plate heat exchanger, the first part element being a first plate (11a) and the second part element a second plate (11b) and wherein the probe (1) is then provided between the adjoining first and second plates (11a) and 11(b) and located in the heat transfer area (10).

2. An apparatus according to claim 1, wherein the heat exchanger plate is a double wall plate formed by the first plate (11a) and the second plate (11b), which adjoin each other and are compressed to be in contact with each other, and wherein the heat exchanger plate (11) comprises a heat transfer area (20), and an edge area (21), which extends around and outside the heat transfer area (20).

3. An apparatus according to claim 2, wherein the probe (1) is located at the heat transfer area (20).

4. An apparatus according to claim 2, wherein at least one of the first plate (11a) and the second plate (11b) comprises a gasket area (22) inside the edge area (21) and a depression (26) along the gasket area (22), thereby forming a gap (27) between the adjoining first and second plates (11a, 11b), in which the probe (1) is at least partly located.

5. An apparatus according to any one of claims 1 to 4, wherein the heat exchanger plates (11) are configured to separate first plate interspaces (12) for a first medium and second plate interspaces (13) for a second medium.

6. An apparatus according to claim 1, wherein the apparatus comprises a pipe, the first part element being an inner pipe (41) and the second part element an outer pipe (42), the inner pipe (41) and the outer pipe (42) forming a space (43) between each other in which the probe (1) is provided.

7. An apparatus according to any one of claims 1 to 6, wherein the structural element (4) is absorbing having a capability to absorb the liquid to be detected into the structural element (4) and to distribute the liquid in the structural element (4) around and along the electric conduit member (2).

8. An apparatus according to any one of claims 1 to 7, wherein the electric insulation is provided between the peripheral border and the electric conduit element.

9. An apparatus according to claim 8, wherein the electric insulation comprises a cover layer (3) extending around the electric conduit element (2) along the length (L) of the electric conduit element (2).

10. An apparatus according to any one of the preceding claims, wherein the probe (1) comprises a sheath (6) provided around the structural element (4).

11. An apparatus according to claim 10, wherein the sheath (6) is permeable to permit said entry of said liquid into the structural element (4).

12. An apparatus according to any one of claims 10 and 11, wherein the sheath (6) is of a metallic material.

13. An apparatus according to claim 12, wherein the sheath (6) is formed by a metal wire wound around the structural element (4).

14. An apparatus according to any one of the preceding claims, wherein the structural element (4) comprises communicating cavities.

15. An apparatus according to any one of the preceding claims, wherein the electric conduit element (2) has a proximal end (2a) and a distal end (2b) and wherein the electric conduit element (2) is connected to a connector (9) provided at the proximal end (2a).

## Patentansprüche

1. Vorrichtung, die eine Sondenvorrichtung umfasst, die konfiguriert ist zum Erfassen des Vorhandenseins einer Flüssigkeit durch Abfühlen der Kapazität zwischen einem elektrischen Leitungselement (2) und einem Masseelement, wobei die Sondenvorrichtung eine Sonde (1) umfasst, die Folgendes umfasst:
das elektrische Leitungselement (2), das eine Längsausdehnung und eine Länge (L) aufweist, und
eine elektrische Isolation, die das elektrische Leitungselement (2) isoliert, wobei
die Sonde (1) ein Strukturelement (4) umfasst, das um das elektrische Leitungselement (2) angeordnet ist und sich entlang der Länge (L) des elektrischen Leitungselements (2) erstreckt, und
das Strukturelement (4) eine Außenumfangsbegrenzung (5) definiert, die bei einer vorbestimmten Mindestentfernung (D) von dem elektrischen Leitungselement (2) angeordnet ist, und
das Strukturelement (4) porös ist, wodurch der Eintritt der zu erfassenden Flüssigkeit in das Strukturelement (4) ermöglicht wird, wobei die zu erfassende Flüssigkeit ein dielektrisches Medium bildet,
**dadurch gekennzeichnet, dass** die Vorrichtung eine Wärmetauscherplatte (11) für einen Plattenwärmetauscher umfasst, wobei das erste Teilelement eine erste Platte (11a) ist und das zweite Teilelement eine zweite Platte (11b) ist und wobei die Sonde (1) dann zwischen der ersten und der zweiten Platte (11a) und (11b), die aneinanderstoßen, bereitgestellt wird und im Wärmetauschbereich (20) angeordnet ist.

2. Vorrichtung nach Anspruch 1, wobei die Wärmetauscherplatte eine doppelwandige Platte ist, die durch die erste Platte (11a) und die zweite Platte (11b) gebildet wird, die aneinanderstoßen und zusammengedrückt werden, um in Berührung miteinander zu stehen, und wobei die Wärmetauscherplatte (11) einen Wärmetauschbereich (20) und einen Kantenbereich (21), der sich um den Wärmetauschbereich (20) und außerhalb desselben erstreckt, umfasst.

3. Vorrichtung nach Anspruch 2, wobei die Sonde (1) am Wärmetauschbereich (20) angeordnet ist.

4. Vorrichtung nach Anspruch 2, wobei wenigstens eine von der ersten Platte (11a) und der zweiten Platte (11b) einen Dichtungsbereich (22) innerhalb des Kantenbereichs (21) und eine Vertiefung (26) entlang des Dichtungsbereichs (22) umfasst, wodurch ein Spalt (27) zwischen der ersten und der zweiten Platte (11a, 11b), die aneinanderstoßen, gebildet wird, in dem die Sonde (1) wenigstens teilweise angeordnet ist.

5. Vorrichtung nach einem der Ansprüche 1 bis 4, wobei die Wärmetauscherplatten (11) dafür konfiguriert sind, erste Plattenzwischenräume (12) für ein erstes Medium und zweite Plattenzwischenräume (13) für ein zweites Medium zu trennen.

6. Vorrichtung nach Anspruch 1, wobei die Vorrichtung ein Rohr umfasst, wobei das erste Teilelement ein inneres Rohr (41) ist und das zweite Teilelement ein äußeres Rohr (42) ist, wobei das innere Rohr (41) und das äußere Rohr (42) einen Raum (43) zwischen einander bilden, in dem die Sonde (1) bereitgestellt wird.

7. Vorrichtung nach einem der Ansprüche 1 bis 6, wobei das Strukturelement (4) absorbierend ist, wobei es eine Fähigkeit aufweist, die zu erfassende Flüssigkeit in das Strukturelement (4) zu absorbieren und die Flüssigkeit in dem Strukturelement (4) um das elektrische Leitungselement (2) und entlang desselben zu verteilen.

8. Vorrichtung nach einem der Ansprüche 1 bis 7, wobei die elektrische Isolation zwischen der Umfangsbegrenzung und dem elektrischen Leitungselement bereitgestellt wird.

9. Vorrichtung nach Anspruch 8, wobei die elektrische Isolation eine Abdeckschicht (3) umfasst, die sich um das elektrische Leitungselement (2) entlang der Länge (L) des elektrischen Leitungselements (2) erstreckt.

10. Vorrichtung nach einem der vorhergehenden Ansprüche, wobei die Sonde (1) eine Hülle (6) umfasst, die um das Strukturelement (4) bereitgestellt wird.

11. Vorrichtung nach Anspruch 10, wobei die Hülle (6) durchlässig ist, um den Eintritt der Flüssigkeit in das Strukturelement (4) zu ermöglichen.

12. Vorrichtung nach einem der Ansprüche 10 und 11, wobei die Hülle (6) aus einem metallischen Material besteht.

13. Vorrichtung nach Anspruch 12, wobei die Hülle (6) durch einen Metalldraht gebildet wird, der um das Strukturelement (4) gewickelt ist.

14. Vorrichtung nach einem der vorhergehenden Ansprüche, wobei das Strukturelement (4) kommunizierende Hohlräume umfasst.

15. Vorrichtung nach einem der vorhergehenden Ansprüche, wobei das elektrische Leitungselement (2) ein proximales Ende (2a) und ein distales Ende (2b) aufweist und wobei das elektrische Leitungselement (2) mit einem Verbinder (9) verbunden ist, der am proximalen Ende (2a) bereitgestellt wird.

## Revendications

1. Appareil comprenant un dispositif de sonde configuré pour détecter la présence d'un liquide grâce à une étape consistant à détecter la capacité entre un élément de conduction électrique (2) et un élément de mise à la terre, le dispositif de sonde comprenant une sonde (1) comprenant
ledit élément de conduction électrique (2) présentant une extension longitudinale et une longueur (L), et
une isolation électrique isolant l'élément de conduction électrique (2),
dans lequel
la sonde (1) comprend un élément structural (4) fourni autour de l'élément de conduction électrique (2) et s'étendant le long de la longueur (L) de l'élément de conduction électrique (2), et
l'élément structural (4) définit une limite périphérique extérieure (5) située à une distance minimale déterminée (D) par rapport à l'élément de conduction électrique (2), et
l'élément structural (4) est poreux, ce qui permet une pénétration dudit liquide à détecter dans l'élément structural (4), dans lequel le liquide à détecter forme un milieu diélectrique,
**caractérisé en ce que** l'appareil comprend une plaque d'échangeur de chaleur (11) destiné à un échangeur de chaleur à plaques, le premier élément de pièce étant une première plaque (11a) et le deuxième élément de pièce étant une deuxième plaque (11b) et dans lequel la sonde (1) est donc fournie entre les première et deuxième plaques (11a) et (11b) adjacentes et est située dans la zone de transfert de chaleur (10).

2. Appareil selon la revendication 1, dans lequel la plaque d'échangeur de chaleur est une plaque à double paroi formée par la première plaque (11a) et la deuxième plaque (11b), qui sont adjacentes l'une à l'autre et sont comprimées de manière à être en contact l'une avec l'autre, et dans lequel la plaque d'échangeur de chaleur (11) comprend une zone de transfert de chaleur (20), et une zone de bord (21), qui s'étend autour et à l'extérieur de la zone de transfert de chaleur (20).

3. Appareil selon la revendication 2, dans lequel la sonde (1) est située au niveau de la zone de transfert de chaleur (20).

4. Appareil selon la revendication 2, dans lequel au moins une parmi la première plaque (11a) et la deuxième plaque (11b) comprend une zone de joint étanche (22) à l'intérieur de la zone de bord (21) et une dépression (26) le long de la zone de joint étanche (22), ce qui forme entre les première et deuxième plaques (11a, 11b) adjacentes un espace vide (27) au sein duquel la sonde (1) est au moins partiellement située.

5. Appareil selon l'une quelconque des revendications 1 à 4, dans lequel les plaques d'échangeur de chaleur (11) sont configurées pour séparer des premiers espaces intermédiaires de plaque (12) pour un premier milieu et des deuxièmes espaces intermédiaires de plaque (13) pour un deuxième milieu.

6. Appareil selon la revendication 1, dans lequel l'appareil comprend une conduite, le premier élément de pièce étant une conduite intérieure (41) et le deuxième élément de pièce étant une conduite extérieure (42), la conduite intérieure (41) et la conduite extérieure (42) formant entre elles un espace (43) au sein duquel est fournie la sonde (1).

7. Appareil selon l'une quelconque des revendications 1 à 6, dans lequel l'élément structural (4) absorbe en présentant une capacité à absorber le liquide à détecter dans l'élément structural (4) et à répartir le liquide dans l'élément structural (4) autour et le long de l'élément de conduction électrique (2).

8. Appareil selon l'une quelconque des revendications 1 à 7, dans lequel l'isolation électrique est fournie entre la limite périphérique et l'élément de conduction électrique.

9. Appareil selon la revendication 8, dans lequel l'isolation électrique comprend une couche de protection (3) s'étendant autour de l'élément de conduction électrique (2) le long de la longueur (L) de l'élément de conduction électrique (2).

10. Appareil selon l'une quelconque des revendications précédentes, dans lequel la sonde (1) comprend une gaine (6) fournie autour de l'élément structural (4).

11. Appareil selon la revendication 10, dans lequel la gaine (6) est perméable de manière à permettre ladite pénétration dudit liquide dans l'élément structural (4).

12. Appareil selon la revendication 10 ou 11, dans lequel la gaine (6) est constituée d'un matériau métallique.

13. Appareil selon la revendication 12, dans lequel la gaine (6) est formée d'un fil métallique enroulé autour de l'élément structural (4).

14. Appareil selon l'une quelconque des revendications précédentes, dans lequel l'élément structural (4) comprend des cavités communicantes.

15. Appareil selon l'une quelconque des revendications précédentes, dans lequel l'élément de conduction électrique (2) présente une extrémité proximale (2a) et une extrémité distale (2b) et dans lequel l'élément de conduction électrique (2) est raccordé à un connecteur (9) fourni au niveau de l'extrémité proximale (2a).
